(19) Europäisches Patentamt / European Patent Office / Office européen des brevets

(11) **EP 3 004 980 B1**

(12) **EUROPEAN PATENT SPECIFICATION**

(45) Date of publication and mention
of the grant of the patent:
**20.02.2019 Bulletin 2019/08**

(21) Application number: **14724743.1**

(22) Date of filing: **16.05.2014**

(51) Int Cl.:
*G02F 1/167* *(2019.01)*     *E06B 9/24* *(2006.01)*

(86) International application number:
**PCT/EP2014/060076**

(87) International publication number:
**WO 2014/191234 (04.12.2014 Gazette 2014/49)**

(54) **AN ELECTROPHORETIC SOLAR CONTROL DEVICE**

ELEKTROPHORETISCHE SOLARSTEUERUNGSVORRICHTUNG

DISPOSITIF DE RÉGULATION SOLAIRE ÉLECTROPHORÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2013 IE 20130182**

(43) Date of publication of application:
**13.04.2016 Bulletin 2016/15**

(73) Proprietors:
• **Vlyte Innovations Limited
Shannon Airport, Co. Clare (IE)**
• **Vlyte Limited
County Clare (IE)**

(72) Inventor: **O'KEEFFE, Donal
Parteen
County Clare (IE)**

(74) Representative: **Hanna Moore + Curley
Garryard House
25/26 Earlsfort Terrace
Dublin 2, D02 PX51 (IE)**

(56) References cited:
**EP-A1- 0 028 147     KR-A- 20120 011 532
US-A1- 2009 176 086     US-A1- 2011 070 417**

## Description

### Related Applications

The present application relates to Irish Patent Application No. S2013/0104 titled "An Electrophoretic Device Having a Transparent Light State" filed on 22 March 2013 and co-filed Irish Patent Application No. S2013/0181 titled "Solar Control Device, Medium and Ink".

### Field

The present invention relates to an electrophoretic solar control device that is wavelength-selective.

### Background to the Invention

It is desirable to electronically control solar transmittance through glass structures to regulate solar heating and sunlight illumination. The sunlight spectrum is made up of an ultra-violet spectrum, a visible light spectrum, and a sunlight infrared spectrum. Generally it is desirable to reject or filter the sunlight ultra-violet spectrum. Preferably, an electronic solution's visible-light functionality would include that provided by mechanical blinds or curtains; for example, selectable light states that include: see-through (i.e. transparent), privacy (opaque) or black-out, and reduced light transmittance. The sunlight infrared spectrum, the wavelength range from 0.78 to 2.5 $\mu$m, accounts for greater than 50% of solar energy, consequently its transmittance accounts for the majority of solar heating while contributing nothing to an inside environment's illumination.

Passive insulating glass units (IGUs) can reduce solar transmittance using a spectrally selective coating that rejects the sunlight infrared spectrum. The coating is soft and degraded by exposure to the environment. Consequently, in the prior art glass panes having a spectrally selective coating must provide the coating in the sealed cavity of an insulated glass unit. But there are applications where an insulated glass unit construction cannot be used due to safety constraints, space limitations, or the need for curved panes. Examples include sloped glass walls, overhanging glass sections, and side panes and roof openings in a vehicle. The prior art provides limited passive solar transmittance solutions for these applications in the form of an applied film having a protected spectrally selective coating.

The available smart glass solutions (also known as switchable windows) have limited functionality and inherent technological obstacles. For example, smart glass having a liquid crystal cell can be switched between a transparent state and a translucent state to provide privacy. If dichroic dye is in solution with the liquid crystal a light absorbing state can be implemented. The available solutions have liquid crystal dispersed discretely or semi continuously in a polymer matrix film and are referred to as polymer dispersed. Examples include Polymer Dispersed Liquid Crystal (PDLC), emulsion based processes often referred to as Nematic Curvilinear Aligned Phase (NCAP), and Polymer Induced Phase Separation (PIPS). A polymer dispersed liquid crystal film is laminated between glass panes to make a smart glass. In the prior art of liquid crystal, smart glass there is no adequate variable light transmittance solution, or no solution offering selective control of solar transmittance.

Suspended Particle Devices (SPD) is another prior art smart glass technology. It employs anisotropic (i.e. rod-like) dipole-particles in a suspension that align in the presence of an electrical field similar to liquid crystal molecules, and the dipole-particles do not move position or translate in a field as is the case with charged-particles in electrophoretic devices as described later. An SPD suspension is dispersed in a polymer matrix film that is subsequently laminated to glass panes. SPD smart glass provides a variable light transmittance function (dimming while maintaining transparency) but does not provide privacy (not opaque or translucent), and does not provide active control over infrared (i.e. SPD devices do not reflect infrared light). An inherent technological obstacle with SPD devices in the prior art is that their light absorptance is not neutral in the visible light range with the consequence that their dimming states appear somewhat blue and their fully darkened state appears dark blue.

There are a range of electrochromic smart glass technologies. These are not the simple light switches of other technologies; instead a reversible chemical reaction occurs when changing light states. Typically these solutions are deposited as an active layer on a glass pane, and the active layer must be provided in the sealed cavity of an insulated glass unit. Electrochromic smart glass IGUs provide some selectable control over visible and infrared light. The visible light function provided is variable light transmittance (i.e. dimming with transparency). A privacy function is not available (not opaque). Undesirably, light absorptance is not neutral for the visible light spectrum causing the variable light transmittance states to appear somewhat blue and the fully darkened state to appear dark blue.

KR 2012/0011532 discloses a window filter sheet and window assembly to actively control the penetration ratio of light. A light conversion layer includes one or more cavities between a first substrate and a second substrate. Dielectric fluid is filled in the cavities. Electrophoretic particles are dispersed within the dielectric fluid. The electrophoretic particles are changed in order to control the strength of light which passes through the first and the second substrate.

Electrophoretic technology would seem to have the advantage of a black state but the prior art does not provide feasible solutions for smart glass. Conventional electrophoretic devices move charged particles in a suspending fluid in the direction of an electrical field. This is normally an orthogonal field from a front electrode face to a rear electrode face (i.e. vertical movement) and a transparent state is not possible. One proposal to create a transparent state in an electrophoretic device is to finely pattern one of its electrodes. This allows the charged particles to be moved laterally as well as vertically and to collect on patterned electrodes (corresponding to a subset of a display area) and having a pitch of about 200 to 300 μm.

The area between patterned electrodes is then transparent and provides visual access. In some examples of display devices employing patterned electrodes just one substrate has electrodes and particles move laterally between neighbouring electrodes with one electrode group accounting for about 70% of the area. But while the fine patterning of electrodes is normal for display devices having a matrix of pixels, it is prohibitively expensive for a device intended for smart glass applications.

Other examples of electrophoretic devices that may have an inherent transparent light state capable of transmitting light and providing visual access include electrophoretic devices that use a dielectrophoretic effect to collect charged particles at a side wall of a capsule in one light state; or electrophoretic devices that use replicated microstructures (e.g., using one of the following processes: embossing , photolithography, extruding, or laser micro machining) to collect charged particles in one light state; or electrophoretic devices that use the dispersal (i.e. in a suspending fluid volume) of 10nm to 50nm scale, charged nanoparticles to transmit light and provide visual access in one light state; or hybrid electrophoretic devices (called electrokinetic by their inventors at Hewlett Packard) that use photolithographically created micro-pits to collect charged particles in one light state. The feasibility of these prior art electrophoretic technologies for smart glass applications is questionable due to the efficacy of their transparent light state or their complexity. For example, one proponent of replicated microstructures proposes making embossing molds on silicon. This would seem to limit such devices to small areas and discrete or batch manufacturing, and such tooling would not seem suited to the large-format, roll-to-roll manufacturing desirable for smart glass.

At ground level in hot climates the energy level in the three sunlight spectrums per square meter with the sun at its zenith is about 32 watts (3%) of UV, 445 watts (44%) of visible, and 527 watts (53%) of infrared, or about 1,004 watts total. In general, the prior art of smart glass does not describe what happens this solar energy when it is absorbed by light states, does not provide the means to manage and adapt the visible light spectrum and the sunlight infrared spectrum for a climate, and does not provide solutions that direct the energy from absorbed sunlight to substantially an outside environment. Furthermore, the prior art of smart glass is largely silent with respect to managing the heat build-up within a device that absorbs incident solar energy.

## Summary of the Invention

The invention provides a flexible electrophoretic film according to claim 1. Preferred embodiments are defined in the dependent claims.

## Brief Description of the Drawings

Embodiments of the invention will now be described, by way of example, with reference to the accompanying drawings, in which:

Figure 1A shows an embodiment 701 of an electrophoretic solar film in a first light state. Its optical composite both rejects the sunlight infrared spectrum and shields its charged particles from this spectrum.

Figure 1B shows embodiment 701 in a second light state.

Figure 2A shows an embodiment 702 of an electrophoretic solar film in a first light state. Its charged particles transmit the sunlight infrared spectrum and its optical composite then rejects this spectrum to an outside environment and provides a low-emissivity face.

Figure 2B shows embodiment 702 in a second light state.

Figure 2C shows embodiment 702 in an intermediate light state of a first set of intermediate light states.

Figure 2D shows embodiment 702 in an intermediate light state of a second set of intermediate light states.

Figure 3A shows an embodiment 703 of an electrophoretic solar film in a first light state. Its charged particles directly reflect the sunlight infrared spectrum and its optical composite provides a low emissivity face.

Figure 3B shows embodiment 703 in a second light state.

Figure 4A shows an embodiment 704 of an electrophoretic solar film in a first light state similar to figure 2A except in its optical composite the optical-layer-set is sandwiched between carrier layers.

Figure 4B shows embodiment 704 in a second light state.

Figure 5A shows an embodiment 705 of an electrophoretic solar film in a first light state similar to figure 4A except in its optical composite the optical-layer-set is adjacent the electrophoretic cell.

Figure 5B shows embodiment 705 in a second light state.

Figure 6A shows an embodiment 706 of an electrophoretic solar film in a first light state similar to figure 2A except its optical composite divides its optical layers into two optical-layer-sets deposited either side of a carrier layer.

Figure 6B shows embodiment 706 in a second light state.

Figure 7 shows a signal lead connecting to embodiment 705's optical composite.

Figure 8 shows a signal lead connecting to embodiment 702's optical composite.

Figure 9 shows a signal lead connecting to embodiment 704's optical composite.

Figure 10 shows an alternative connecting technique to figure 9 for embodiment 704.

Figure 11 shows a signal lead connecting to embodiment 706's optical composite.

Figure 12 shows an embodiment 712 of a sunroof for a vehicle and comprises electrophoretic film 706 applied to a glass laminate.

Figure 13 shows an embodiment 713 of a sloped glass wall and comprises electrophoretic film 703 applied to a glass laminate.

Figure 14 shows an embodiment 714 of a glass laminate and comprises electrophoretic film 704 applied to a rigid pane.

## Detailed Description

The embodiments are in the form of a flexible film and in use are applied to the inner face of a rigid pane with an optically clear adhesive to take-on the form of a monolithic glazing. Embodiments provide a solution for applications where an insulated glass unit cannot be used due to safety constraints, space limitations, the need for curved panes, or compliance with industry standards. Examples of applications where embodiments are suited include sloped glass walls, overhanging glass sections, and side panes and roof openings in a vehicle. Embodiments reject solar energy and substantially direct it to an outside environment to reduce (or minimize) solar heating of an inside environment thereby saving on the energy cost of cooling. In substantially directing rejected solar energy to an outside environment the solar control films herein provide a solution to the following problem: how to minimize absorbed sunlight (by light states) dissipating as heat from both faces of a device by thermal radiation and convection. Unless otherwise countered, the fraction of thermal radiation dissipating from each face is in proportion to the temperature difference between a face and air in the contacting environment, and the fraction of convection from each face is also in proportion to the temperature difference as well as the air velocity in the contacting environment. Embodiments overcome this dependence of heat flow on the temperature differences of its respective faces by firstly minimizing sunlight energy absorbed by light states so that there is less heat to dissipate, and secondly, rejecting the sunlight infrared spectrum directly to an outside environment using a wavelength-selective optical composite as one of an embodiment's substrates. Furthermore, in preferred embodiments a face of a solar control film in contact with an inside environment provides a low-emissivity surface to effectively block thermal radiation flow from charged particles (they absorb sunlight energy) to an inside environment.

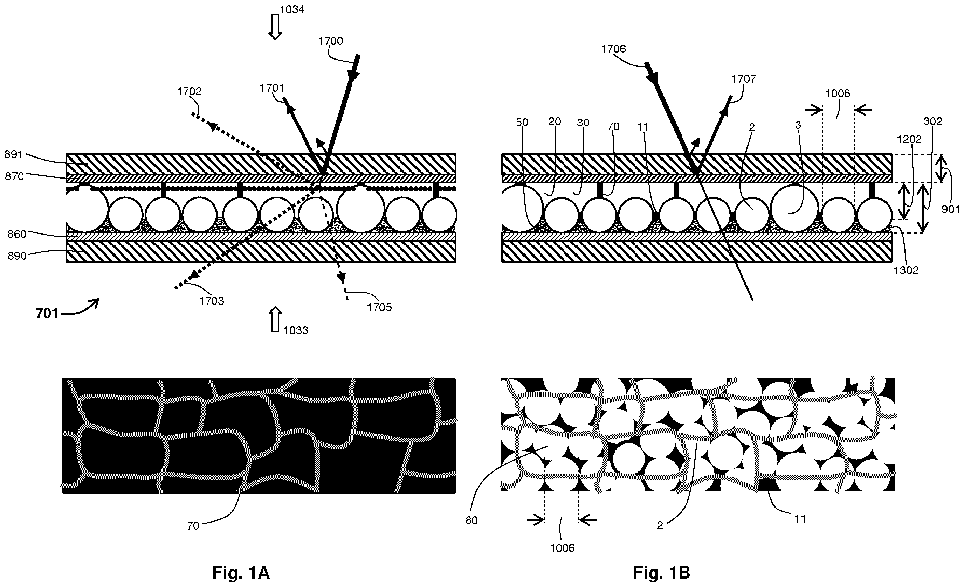

Figures 1A to 14 show embodiments and demonstrate the current invention. Electrophoretic film embodiments comprise a film substrate and a parallel spaced apart optical composite. The space between these two comprises an electrophoretic cell that contains an electrophoretic ink, and the electrophoretic cell is optically bonded (i.e. applied) to both the film substrate and optical composite. The electrophoretic ink has charged particles, preferably black, and preferably having the same polarity (i.e. the same type). The substrate is coated with a conductive electrode that is substantially transparent to sunlight's visible and infrared spectrums. The optical composite is wavelength-selective by transmitting the sunlight visible spectrum while significantly rejecting the sunlight infrared spectrum, and the optical composite comprises an electrode for the electrophoretic cell also. The optical composite comprises optical layers constructed on one or more carrier layers (e.g.. polymer substrates) and the optical layers include two or more conductive layers and one or more dielectric layers. The optical layers integrate wavelength-selectivity with a conducting electrode within the optical composite.

The electrophoretic cell has at least one light state transparent to visible light to provide visual access. Charged particles respond to an electric field applied to an electrophoretic film's electrodes to move between light states. In a first extreme light state the particles are maximally spread within the electrophoretic cell to lie in the path of sunlight through the electrophoretic film and a film's first light state strongly rejects incident sunlight. In a second extreme light state the charged particles are maximally concentrated within the electrophoretic cell to remove them from the path of sunlight through the film and a film's second light state transmits the sunlight visible spectrum but rejects the sunlight infrared spectrum using its wavelength-selective optical composite. In intermediate light states the charged particles move to variable positions between the first and second light states to partially absorb visible sunlight and provide a variable black tinted appearance. Embodiments reject the sunlight infrared spectrum with a low level of absorption and consequential heat.

The optical composite comprises optical layers having conductive layers and dielectric layers arranged in one or more sets, and the conductive layers can be metallic or semiconductor layers. The optical layers are thin film nano-coatings constructed on a carrier or substrate film preferably using a sputter deposition technique. The optical composite can also be described as an optical composite laminate or optical composite structure due to its layered construction or assembly.

The wavelength-selective optical composite is in the form of a shortpass filter for visible sunlight having a cut-off wavelength adjacent the visible spectrum and within the sunlight infrared spectrum. In a second light state this infrared cut-off wavelength determines the spectrum of transmitted sunlight and in embodiments its selected value is preferably adapted for an operating climate.

The optical composite provides one of the two electrodes needed to apply an electrical field to the electrophoretic cell. The electrode is the conductive layer within the optical layers that is nearest (or adjacent) the electrophoretic cell. To facilitate connection of a signal generator lead, the electrode provides a conductive surface free of over layers in an edge area (i.e. a connection ledge).

In embodiments the integration of the short pass filter for visible sunlight with the conducting electrode within the wavelength-selective optical composite maximizes light transmittance in the second light state. In some embodiments the wavelength-selective optical composite also provides a low-emissivity face to substantially block thermal radiation heat flow from charged particles (arising from absorbed visible sunlight energy) to an inside environment. The low-emissivity face has an emissivity of 0.35 or less, preferably 0.25 or less, and more preferably 0.20 or less. Its thermal radiation reflectance is provided by the conductive layer (within the optical layers) nearest an inside environment.

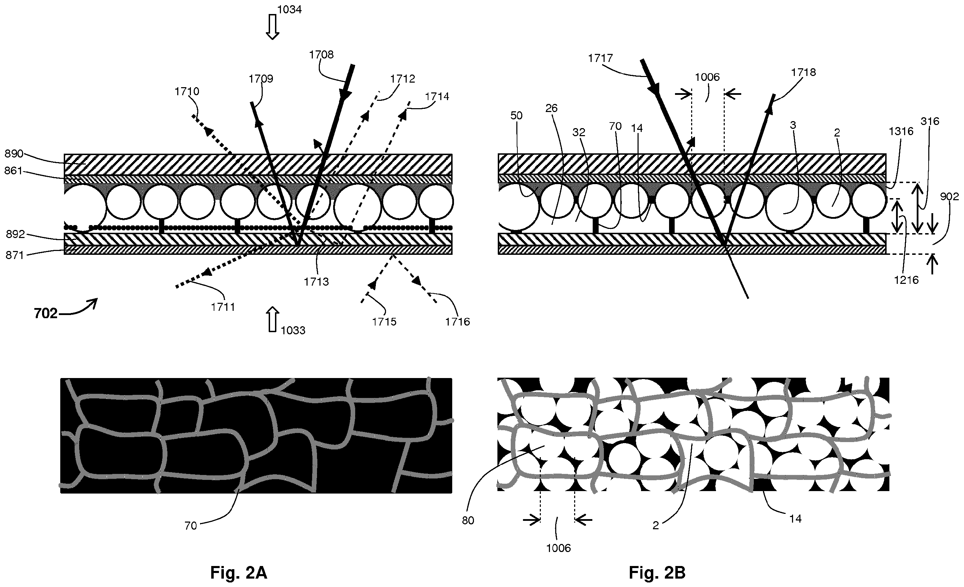

Embodiments having a low-emissivity face cooperate with charged particles within the electrophoretic cell that are themselves wavelength-selective in order to meet the requirement that the sunlight infrared spectrum is rejected with a low level of absorption and consequential heat. The wavelength-selective charged particles strongly absorb visible sunlight and avoid (or minimize) significant absorption of sunlight infrared. As a consequence such particles do not heat-up when exposed to the sunlight infrared spectrum allowing the optical composite to be located adjacent an inside environment where it can be used to provide a low-emissivity surface (e.g., see figure 2A).

In use embodiments make solar efficient windows and electrophoretic films that can be used in applications including a sunlight attenuator, a sunlight shutter, a sunlight modulator, a variable sunlight transmittance sheet, a variable sunlight rejection sheet, a variable sunlight reflectance sheet, or a sunlight glare-avoidance device.

The electrophoretic films and devices shown in figures 1A to 14 have an inherent transparent light state and the devices, methods of construction, and methods of operating are described in the related Irish Patent Application No. S2013/0104 titled "An Electrophoretic Device Having a Transparent Light State". In the cited document the method of construction includes building a non-planar polymer structure on a first substrate using an optical clear adhesive to adhere the structure to the substrate, and laminating a second substrate along with the electrophoretic ink to the non-planar structure. The electrophoretic ink can have solubilized prepolymer components that in a subsequent step are phase separated by curing to divide the electrophoretic ink into discrete or semi-discrete volumes and form polymer walls bonding the second substrate to the non-planar structure. In embodiments the optical composite forms one substrate for the electrophoretic cell and can be used as either the first (and have the non-planar structure bonded to it or constructed on it) or second substrate (and be laminated along with the electrophoretic ink).

It will be appreciated that any electrophoretic cell that has one or more transparent light states can equally be used as a substitute for the electrophoretic cells described herein once the optical composite and techniques described herein are applied. In such embodiments the optical composite is applied to the electrophoretic cell by any suitable technique including bonding with an optical adhesive or coating the electrophoretic cell materials onto the optical composite and curing or solidifying the electrophoretic cell.

In many of the figures that follow embodiments are shown in two views: one view shows a cross section, and the other view is of a face of an embodiment and can be a front or rear face unless otherwise indicated. Cross sectional views represent a diagonal cross section of the face view unless otherwise indicated. In addition, a figure having a letter denominator represents an embodiment in a specific light state and each letter denominated figure (for a given number) is of the same embodiment, just different light states. For example, figures 2A to 2D are of the same embodiment 702 in different light states.

Figure 1A shows an embodiment 701 of an electrophoretic film device that has an optical composite 901 comprising a carrier 891 and an optical-layer-set (i.e. a set of optical layers) 870. The latter is adjacent electrophoretic cell 302 and between it and outside environment 1034. The optical-layer-set 870 shields or protects charged particles 11 from the sunlight infrared spectrum. Electrophoretic cell 302 is indicated by an arrow in figure 1B and includes all of the elements sandwiched between the optical-layer-set 870 and electrode 860.

Electrophoretic ink 30 has charged particles 11 that strongly absorb the entire sunlight spectrum. Particles 11 are dispersed in a transparent suspending fluid 20. To minimize and avoid haze in light states the refractive index of transparent polymer elements within electrophoretic cell 302 (including polymer walls 70, space-filling polymer 50, and polymer balls 2 and 3) are matched (e.g., within 0.002 of each other) to the suspending fluid 20.

Figure 1A shows embodiment 701 in the first light state and represents a maximum spreading or distribution of charged particles 11 in a plane adjacent the optical-layer-set 870. Negatively charged particles 11 (charged particles are either all positive or all negative) move within suspending fluid 20 in response to an electrical field until they are near uniformly spread planar with the optical-layer-set 870 and lie in the path of sunlight through the cell 302. The electrical field is applied between an electrode layer within the optical-layer-set 870 and the opposite electrode 860 by a controller (not shown) that establishes a positive potential (in the case of negatively charged particles 11) between the top (i.e. provided by 870) and bottom 860 electrodes. A suitable controller and signals for operating electrophoretic film 701 are described in the related Irish Patent Application No. S2013/0104 titled "An Electrophoretic Device Having a Transparent Light State". In the first light state charged particles 11 cover a face of embodiment 701, the incident sunlight infrared spectrum is strongly rejected by the optical-layer-set 870 and the sunlight visible spectrum is absorbed by charged particles 11, and film 701 appears black. Depending on the charged particle loading in electrophoretic ink 30 the first light state can be partially transparent (i.e. low loading level) or opaque (i.e. high loading level).

Figure 1B shows embodiment 701 in the second light state and represents a maximum concentrating of charged particles 11 upon the surface of non-planar structure 1302. Negatively charged particles 11 move within suspending fluid 20 in response to an electrical field until they are concentrated in the space between polymer balls 2 and 3 (i.e. the volume defined by the surfaces there between) to remove them from the path of sunlight through cell 302. The electrical field is applied between the electrodes and establishes a negative potential (in the case of negatively charged particles 11) between the top (i.e. provided by 870) and bottom (i.e. 860) electrodes. Each polymer ball 2 or 3 defines an aperture 1006 that is substantially free of particles 11 and consequently is transparent to sunlight. Incident sunlight in the infrared spectrum is rejected by the optical-layer-set 870 but visible sunlight is transmitted and passes through an aperture 1006 defined by a polymer ball 2 and exits the cell 302 substantially free of attenuation or light scattering.

Polymer balls 2 are near monodisperse microspheres or protrusions and account for > 90% of balls, and polymer balls 3 are monodisperse and act as cell-gap spacers by establishing the thickness of the cell 302. Polymer balls 3 also ensure that electrophoretic ink 30 is free to surround or engulf polymer balls 2 in the electrophoretic ink layer 1202 and that particles 11 can spread over polymer balls 2 unobstructed in the first light state. Polymer balls 2 and 3 project into the electrophoretic ink 30's volume and partially fill electrophoretic layer 1202 that otherwise indicates the volume filled with electrophoretic ink 30. The polymer structure 1302 indicates a non-planar structure optionally bonded to an optical-clear-adhesive (OCA) layer (not shown) and adjacent the bottom electrode 860 within cell 302. It comprises polymer 50 and polymer balls 2 and 3. Polymer 50 fills the space between polymer balls 2 and 3 approximately up to an equator plane. In embodiment 701 polymer balls 2 and 3 are arranged tightly in a monolayer and are described as having close packing. The face view of figure 1B shows polymer balls 2 having random close packing.

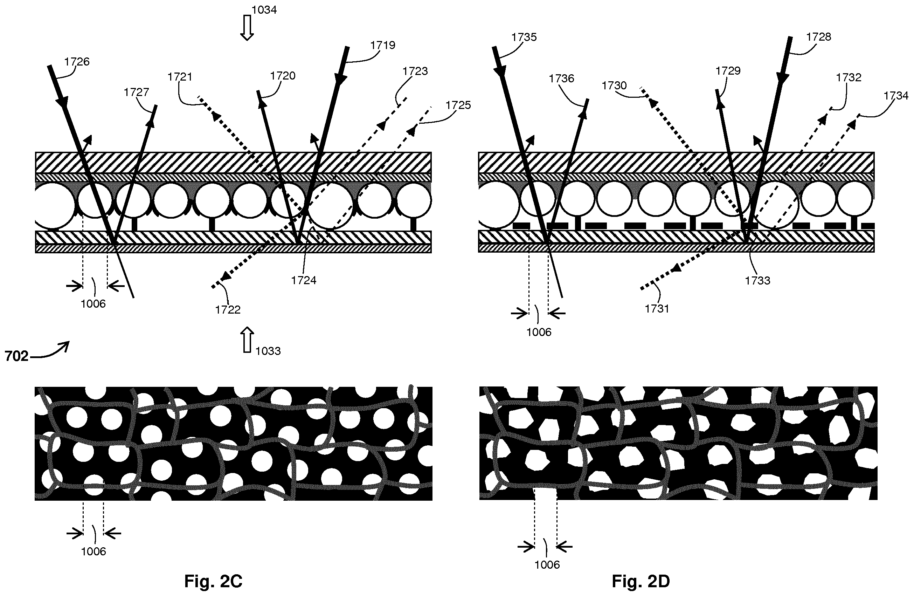

In embodiments the substrate 890 and carrier films are flexible and can be a polymer film or thin, flexible glass. Suitable transparent polymer sheet material includes PET (i.e. polyethylene terephthalate), PEN (i.e. polyethylene napthalate), PES (i.e. polyether sulfone), PC (i.e. polycarbonate), PI (i.e. polyimide), or FRP (i.e. fiber reinforced plastic), unless otherwise noted. Suitable flexible glass can have a thickness of 30 to 150 $\mu$m and for example is available from Nippon Electric Glass Co. Ltd in 50 $\mu$m or 100 $\mu$m roll formats. Preferably the substrate 890 and carrier films are capable of conforming to a curvature (i.e. roll) having a diameter of 300mm or more, and preferably 150mm or more. Unless otherwise described the electrodes 860 and 861 (see figures 1 and 2 respectively) are any suitable transparent conductor. For example, ITO (i.e. indium tin oxide), FTO (i.e. fluorine tin oxide), IZO (i.e. indium zinc oxide), carbon nanotubes, silver nanowires, or a conductive polymer such as PEDOT (i.e. poly(ethylenedioxythiophene). Silver nanowires or PEDOT can be printed or coated as a conductive ink onto a substrate. Colour-neutral, transparent electrodes 861 are preferred for embodiments that require high optical quality such as electrodes that have an anti-reflection coating to minimize visible light reflection (e.g., the Flexvue range ITO electrodes from Solutia). Electrodes 860 and 861 substantially transmit the sunlight infrared spectrum, and preferably at least partially transmit thermal radiation.

Polymer walls 70 define cavities 80 (see figure 1B) that divides electrophoretic ink 30 into discrete or semi discrete volumes or regions within electrophoretic cell 302. The cross sectional views show walls 70 as predominantly vertical and extending from the surface of polymer balls 2 and 3 to top electrode 60. The polymer walls 70 can be formed by a polymer induced phase separation process (known as PIPS in the prior art).

In figure 1A sunlight ray 1700 has its infrared spectrum substantially rejected by the optical-layer-set 870 as shown by reflected ray 1701 and its visible spectrum absorbed by charged particles 11 in a first light state. The solar energy in its infrared spectrum is rejected to an outside environment 1034 without significant absorption. The solar energy in the absorbed visible spectrum is diffusely conducted from particles 11 and flows to the outside environment 1034 as represented by ray 1702 and flows to the inside environment 1033 as represented by ray 1703. Thermal radiation emitted by particles 11 (due to absorbed solar energy) flows to the inside environment as represented by ray 1705, but its flow to the outside environment 1034 is interrupted by the optical-layer-set 870. Absorbed solar energy (from absorbed visible sunlight) thermally radiates and convects from both faces of device 701.

The fraction of thermal radiation from each face is in proportion to the temperature difference between a face and air in the contacting environment, and the fraction of convection from each face is also in proportion to the temperature difference as well as the air velocity in the contacting environment. As it is the respective temperature differences and air velocities that determine how the heat caused by absorbed visible sunlight (i.e. solar energy) is distributed between an inside and outside environment an embodiment such as 701 is not as efficient as following embodiments that provide a low-emissivity surface to block thermal radiation flow from charged particles to an inside environment. But embodiment 701 does minimize transmission of solar energy in all light states by rejecting the sunlight infrared spectrum (> 50% of solar energy) without significant absorption using its optical-layer-set 870, and absorbed visible sunlight by charged particles 11 generally has about 50% or more of its energy transmitted to an outside environment 1034.

To the extent that embodiment 701 does not significantly absorb sunlight energy in its light states it can avoid heating-up, and the operating temperature of electrophoretic cell 302 in use exposed to sunlight can remain near to the inside environment's temperature. Figure 1B shows the second light state of embodiment 701. Sunlight ray 1706 has its infrared spectrum rejected by the optical-layer-set 870 as shown by reflected infrared ray 1707 and its visible spectrum substantially transmitted by an aperture 1006 to an inside environment 1033. Embodiment 701 rejects the sunlight infrared spectrum in all light states using its optical-layer-set 870, it provides varying levels of illumination (i.e. visible light transmission) in intermediate light states, and provides a maximum illumination level in a second light state.

In embodiment 701 it is necessary that the optical composite 901 shields or protects charged particles 11 from the sunlight infrared spectrum because otherwise the particles would absorb sunlight's entire spectrum in a first light state and possibly cause unacceptable heating-up of film 701 in intense sunlight. But, in the embodiments that follow the absorption profile of charged particles is also wavelength-selective and charged particles substantially transmit or reflect the sunlight infrared spectrum above a cut-off wavelength. As a consequence of using wavelength-selective charged particles the optical composite can be arranged adjacent the inside environment and preferably provides an embodiment with a low-emissivity face or surface to effectively block thermal radiation heat flow from charged particles to an inside environment.

Charged particles derive their wavelength selectivity from colourant within their core. The cut-off wavelength (at shorter wavelengths the sunlight spectrum is absorbed) is within the range from 0.65 to 1.5 $\mu$m, and preferably 0.7 to 1.2 $\mu$m, and most preferably 0.725 to 1.1 $\mu$m. In embodiments any colourant chemistry that significantly transmits or reflects the sunlight infrared spectrum, and has proven light-fastness and weather-fastness in an outdoor paint formulation, is suitable for incorporation into wavelength-selective charged particles. The co-filed Irish Patent Application No. S2013/0181 titled "Solar Control Device, Medium and Ink" describes suitable chemistries for wavelength-selective charged particles. For example, charged particles that have a perylene black colourant within their core substantially transmit the sunlight infrared spectrum and strongly absorb the visible spectrum. In another example, charged particles that have one of $Ca_2MnO_4$, $Sr_2MnO_4$, or $Ba_2MnO_4$ colourant within their core substantially reflect the sunlight infrared spectrum and strongly absorb the visible spectrum.

Figure 2A shows an embodiment 702 that has an optical composite 902 comprising a carrier 892 and an optical-layer-set 871. Embodiment 702 has an electrophoretic ink 32 that has wavelength-selective charged particles 14 that substantially transmit the sunlight infrared spectrum and absorb the visible spectrum. Sunlight is rejected by combining strong absorption of the sunlight visible spectrum by wavelength-selective charged particles 14 with the rejection of the sunlight infrared spectrum by the optical-layer-set 871. The latter provides embodiment 702 with a low-emissivity face exposed to the inside environment 1033. Particles 14 are suspended in transparent, index-matched fluid 26 (see earlier description of fluid 20). Electrophoretic film 702 has similar elements to film 701: its electrophoretic cell is 316, its electrophoretic ink layer is 1216, and its non-planar structure is 1316.

In figure 2A sunlight ray 1708 is incident on electrophoretic film 702; in a first light state wavelength-selective charged particles 14 absorb the visible and transmit the infrared spectrums of ray 1708; the optical-layer-set 871 partially or completely rejects the infrared spectrum of ray 1708 to an outside environment as shown by reflected infrared ray 1709; the conducted heat from particles 14 (from absorbed visible sunlight) flows to the outside environment 1034 as represented by ray 1710 and flows to the inside environment 1033 as represented by ray 1711; the thermal radiation emitted by particles 14 (from absorbed visible sunlight) flows to the outside environment as represented by ray 1712 and flows to the inside environment as represented by ray 1713; the optical-layer-set 871 reflects ray 1713 causing the thermal radiation to flow to the outside environment as represented by ray 1714.

Both faces of electrophoretic film 702 diffuse energy from ray 1708 absorbed by particles 14 to their respective contacting environments by air convection (not shown) while only the face in contact with the outside environment 1034 diffuses absorbed energy by thermal radiation. The optical-layer-set 871 provides the face in contact with an inside environment 1033 with low-emissivity to effectively prevent thermal radiation flow from film 702 to an inside environment. In addition, thermal radiation from an inside environment 1033 is reflected due to the low-emissivity face provided by the optical-layer-set 871: see incident thermal radiation ray 1715 and reflected ray 1716. This has the advantage of minimizing heat loss from an inside environment in cold weather.

Figure 2B shows the second light state of embodiment 702. Incident sunlight ray 1717 is transmitted by an aperture 1006 but its infrared spectrum is partially or completed rejected by the optical-layer-set 871 (see reflected infrared ray 1718) while its visible spectrum is substantially transmitted to an inside environment 1033.

Figure 2C shows an intermediate light state in a first set of intermediate light states. Wavelength-selective charged particles 14 are partially concentrated by protrusions 2 and define apertures 1006 that have a smaller diameter than in the second light state shown in figure 2B. Sunlight ray 1719 is incident outside apertures 1006 and has its visible light spectrum absorbed by concentrated particles 14 and its infrared spectrum transmitted by particles 14 but rejected by the optical-layer-set 871. The rejected sunlight infrared is shown as reflected ray 1720. Sunlight ray 1726 has its visible and infrared spectrums substantially transmitted within apertures 1006, and the sunlight infrared spectrum is rejected by the optical-layer-set 871 as shown by infrared reflected ray 1727. The absorbed energy (i.e. the visible spectrum) of ray 1719 is predominantly directed to an outside environment 1034 as described for figure 2A: see conducted heat rays 1721 and 1722, and thermal radiation rays 1723, 1724 and 1725. Intermediate light states provide embodiments with a variable, black tinted appearance.

Figure 2D is similar to figure 2C except it shows an intermediate light state in a second set of intermediate light states. Wavelength-selective charged particles 14 are partially concentrated adjacent the optical-layer-set 871 and define apertures 1006. Sunlight ray 1728 is incident outside apertures 1006 and has its visible light spectrum absorbed by concentrated particles 14 and its infrared spectrum transmitted by particles 14 but rejected by the optical-layer-set 871. The rejected sunlight infrared is shown as reflected ray 1729. Sunlight ray 1735 has its visible and infrared spectrums substantially transmitted within apertures 1006, and the sunlight infrared spectrum is rejected by the optical-layer-set 871 as shown by infrared reflected 1736. The absorbed energy (i.e. the visible spectrum) of ray 1728 is predominantly directed to an outside environment 1034 as described for figure 2A: see conducted heat rays 1730 and 1731, and thermal radiation rays 1732, 1733 and 1734.

In embodiment 702 the optical-layer-set 871 provides a low-emissivity face by having its carrier 892 adjacent the electrophoretic cell 316 spacing apart the optical-layer-set 871 and cell 316. An electrical field applied to the electrode layer within the optical-layer-set 871 and top electrode 861 is across electrophoretic cell 316 and the carrier layer 892. Consequently the carrier layer 892 is selected to be as thin as feasible, preferably 75 $\mu$m or less, more preferably 50 $\mu$m or less, and most preferably 25 $\mu$m or less.

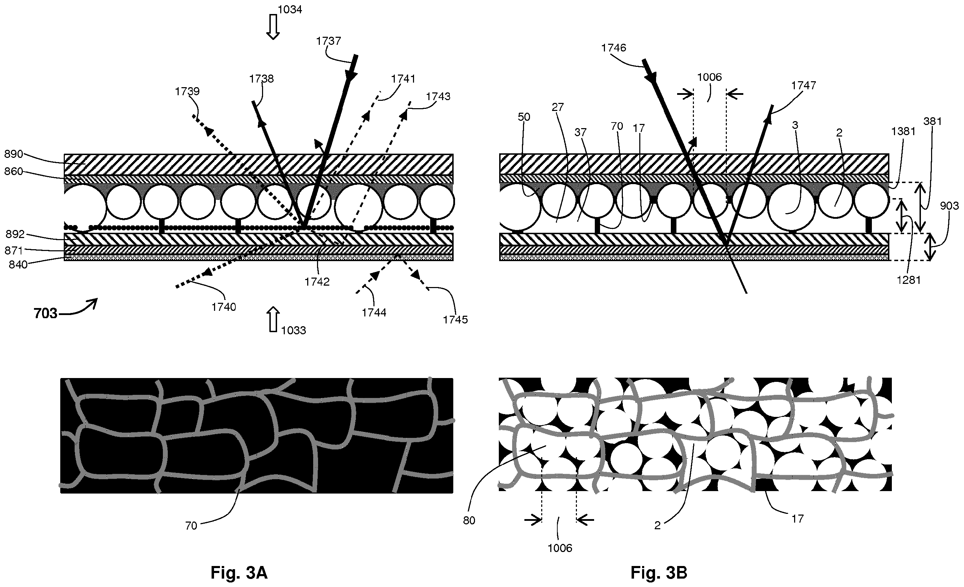

Figure 3A shows an embodiment 703 that has an optical composite 903 comprising a carrier layer 892, an optical-layer-set 871 and a protective layer (or hard coat) 840. Embodiment 703 is shown in a first light state. Similar to embodiment 702, electrophoretic film 703 has charged particles that are wavelength-selective except in this embodiment particles 17 directly reflect the sunlight infrared spectrum. Sunlight infrared not directly reflected by particles 17 in light states is rejected by the optical-layer-set 871. Similar to embodiment 702, the latter provides embodiment 703 with a low-emissivity face. The protective layer 840 protects the optical-layer-set 871 in use while substantially transmitting thermal radiation to ensure the efficacy of the low-emissivity face. Protective layer 840 can include a protective hard coat layer over protective nano-coating layers. The latter are described later.

Electrophoretic ink 37 comprises particles 17 suspended in transparent, index-matched fluid 27 (see earlier description of fluid 20). Embodiment 703 has similar elements to film 701: its electrophoretic cell is 381, its electrophoretic ink layer is 1281, and its non-planar structure is 1381. The co-filed Irish Patent Application No. S2013/0181 titled "Solar Control Device, Medium and Ink" describes the use of infrared-reflecting charged particles in greater detail.

In figure 3A sunlight ray 1737 is incident on electrophoretic film 703; in a first light state wavelength-selective charged particles 17 absorb the visible and directly reflect the infrared spectrums of ray 1737 as shown by reflected infrared ray 1738; the conducted heat from particles 17 (from absorbed visible sunlight) flows to the outside environment 1034 as represented by ray 1739 and flows to the inside environment 1033 as represented by ray 1740; the thermal radiation emitted by particles 17 (from absorbed visible sunlight) flows to the outside environment as represented by ray 1741 and flows to the inside environment as represented by ray 1742; the optical-layer-set 871 reflects ray 1742 causing the thermal radiation to flow to the outside environment as represented by ray 1743. Thermal radiation from an inside environment 1033 is reflected due to the low-emissivity face provided by the optical-layer-set 871: see incident thermal radiation ray 1744 and reflected ray 1745.

Figure 3B shows the second light state of embodiment 703. Incident sunlight ray 1746 is transmitted by an aperture 1006 but its infrared spectrum is partially or completed rejected by the optical-layer-set 871 (see reflected infrared ray 1747) while its visible spectrum is substantially transmitted to an inside environment 1033.

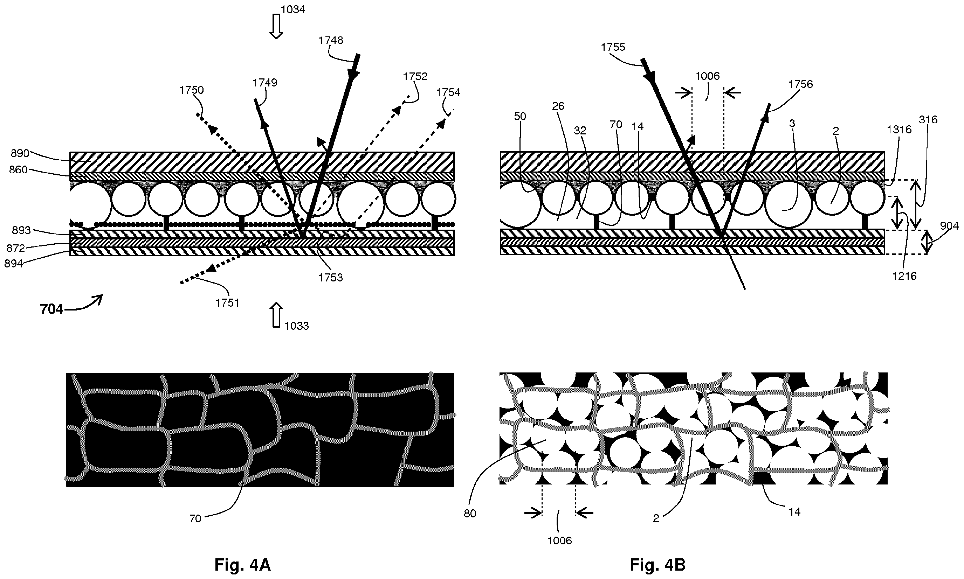

Figure 4A shows an embodiment 704 that has an optical composite 904 comprising two carriers 893 and 894, and an optical-layer-set 872. Embodiment 704 is shown in a first light state. Similar to embodiment 702, electrophoretic film 704 has charged particles 14 that are wavelength-selective. But, in this embodiment the optical-layer-set 872 is sandwiched between two carriers 893 and 894. Carrier 893 is similar to carrier 892 described in relation to electrophoretic film 702, and carrier 894 replaces protective layer 840 in film 703 to effectively seal and protect the optical-layer-set 872 from the environment. In preferred embodiments carrier layer 894 substantially transmits thermal radiation so that the optical-layer-set 872 can provide a low-emissivity face to the inside environment. It will be appreciated that a material having high thermal transmittance has low thermal radiation emittance, and together with the thermal radiation reflective properties of the optical-layer-set 872 provides a low-emissivity face. Preferably the thickness of carrier 894 is 35 $\mu$m or less, more preferably, 20 $\mu$m or less, and most preferably, 15 $\mu$m or less, to maximize thermal radiation transmittance. Preferred polymer materials for carrier 894 are described later.

In figure 4A sunlight ray 1748 is incident on electrophoretic film 704; in a first light state wavelength-selective charged particles 14 absorb the visible and transmit the infrared spectrums of ray 1748; the optical-layer-set 872 partially or completely rejects the infrared spectrum of ray 1748 to an outside environment 1034 as shown by reflected infrared ray 1749; the conducted heat from particles 14 (from absorbed visible sunlight) are shown as rays 1750 and 1751, and the thermal radiation rays are shown as 1752, 1753 and 1754. Figure 4B shows the second light state of embodiment 704. Incident sunlight ray 1755 is transmitted by an aperture 1006 but its infrared spectrum is partially or completely rejected by the optical-layer-set 872 (see reflected infrared ray 1756) while its visible spectrum is substantially transmitted to an inside environment 1033.

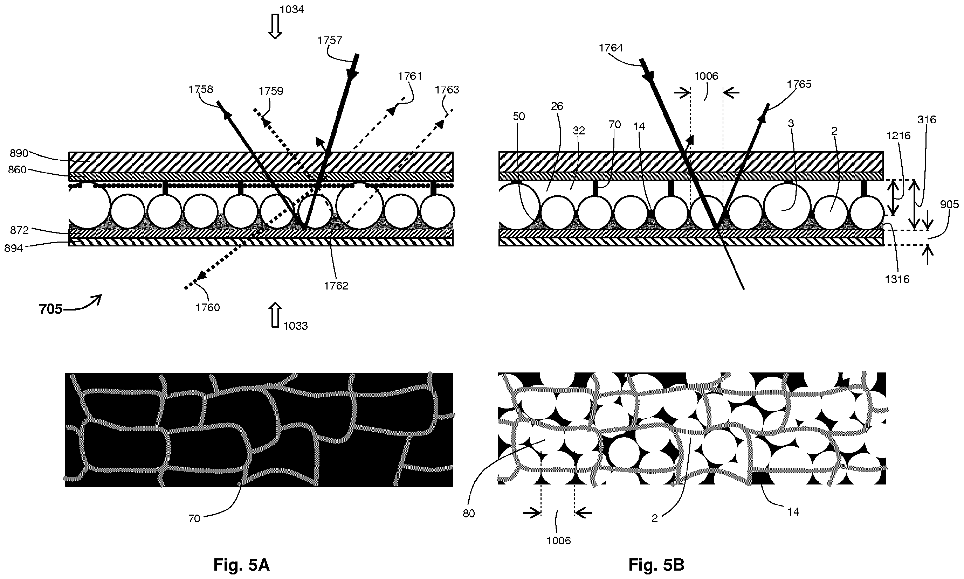

Figure 5A shows an embodiment 705 that has an optical composite 905 comprising the carrier 894, and the optical-layer-set 872. Embodiment 705 is shown in a first light state and the electrophoretic cell 316 has its orientation reversed with respect to embodiments 702 and 704. It will be appreciated that either orientation can be used in an embodiment. Similar to embodiment 704, electrophoretic film 705 has charged particles 14 that are wavelength-selective. But, in this embodiment the optical-layer-set 872 is adjacent the electrophoretic cell 316 similar to embodiment 701 (shown in figures 1A and 1B). As described in relation to embodiment 704, preferably carrier 894 substantially transmits thermal radiation so that the optical-layer-set 872 can provide a low-emissivity face to the inside environment. The advantage of optical composite 905 over the preceding 902, 903 and 904 composites is that the electrical field is not applied across a carrier layer and this significantly reduces an embodiment's operating voltage. A further advantage is that connection of a signal lead to the electrode (i.e. the conductive layer nearest the cell 316) does not require the removal of over coating layers.

In figure 5A sunlight ray 1757 is incident on electrophoretic film 705; in a first light state wavelength-selective charged particles 14 absorb the visible and transmit the infrared spectrums of ray 1757; the optical-layer-set 872 partially or completely rejects the infrared spectrum of ray 1757 to an outside environment 1034 as shown by reflected infrared ray 1758; the conducted heat from particles 14 (from absorbed visible sunlight) are shown as rays 1759 and 1760, and the thermal radiation rays are shown as 1761, 1762 and 1763. Figure 5B shows the second light state of embodiment 705. Incident sunlight ray 1764 is transmitted by an aperture 1006 but its infrared spectrum is partially or completed rejected by the optical-layer-set 872 (see reflected infrared ray 1765) while its visible spectrum is substantially transmitted to an inside environment 1033.

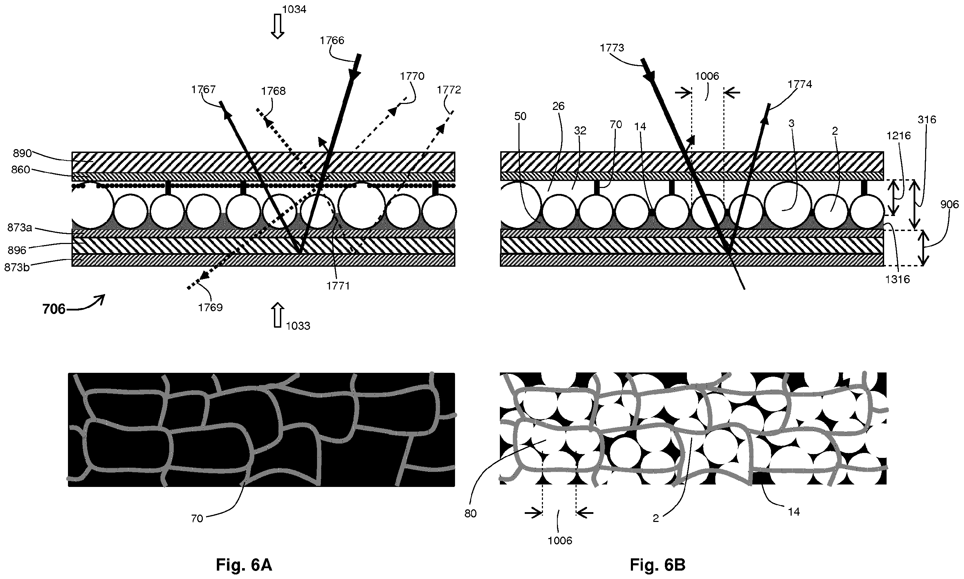

Figure 6A shows an embodiment 706 that has an optical composite 906 comprising the carrier 896 and the optical layers distributed as two optical-layer-sets 873a and 873b. Embodiment 706 is shown in a first light state. Similar to embodiment 705, electrophoretic film 706 has charged particles 14 that are wavelength-selective.

The optical composite 906 has its optical layers distributed as two optical-layer-sets 873a and 873b and constructed on opposing sides of carrier 896. Its electrode is part of the optical-layer-set 873a and is adjacent the electrophoretic cell 316, and its low-emissivity layer is part of the optical-layer-set 873b and is adjacent the inside environment 1033. Optical composite 906 has the following advantages: its electrode provides unrestricted connection of a signal lead, its electrode is adjacent the electrophoretic cell avoiding a voltage drop across its carrier on application of an electrical field, and its low-emissivity layer can be in contact with the inside environment 1033 avoiding the requirement that the carrier must substantially transmit thermal radiation.

In common with any other embodiments where the electrode is in direct contact with the electrophoretic cell 316, the electrode layer and possibly a dielectric layer can be coated (or constructed) directly onto the cell rather than being constructed on a carrier as in the case of the remaining optical layers. In such embodiments the remaining layers and carrier are optically bonded (or applied) using any suitable optical adhesive to the optical layers prior coated onto the electrophoretic cell and together the optical layers and carrier comprise the optical composite. For example, silver nanowires or PEDOT can be printed or coated as a conductive ink onto the electrophoretic cell to form an electrode layer and the remaining optical layers and carrier are in the form of a film that is bonded with an OCA layer to the silver nanowires layer.

Silver nanowires suspensions/dispersions are available from Cambrios Technology Inc. or Seashell Technology (www.seashelltech.com).

In figure 6A sunlight ray 1766 is incident on electrophoretic film 706; in a first light state wavelength-selective charged particles 14 absorb the visible and transmit the infrared spectrums of ray 1766; the optical layers comprising 873a and 873b partially or completely reject the infrared spectrum of ray 1766 to an outside environment 1034 as shown by reflected infrared ray 1767; the conducted heat from particles 14 (from absorbed visible sunlight) are shown as rays 1768 and 1769, and the thermal radiation rays are shown as 1770, 1771 and 1772. Figure 6B shows the second light state of embodiment 706. Incident sunlight ray 1773 is transmitted by an aperture 1006 but its infrared spectrum is partially or completed rejected by the optical layers comprising 873a and 873b (see reflected infrared ray 1774) while its visible spectrum is substantially transmitted to an inside environment 1033.

It will be appreciated that in a related embodiment the optical-layer-set 873a can comprise the majority of the optical layers including substantially providing wavelength-selectivity (i.e. the rejection of the sunlight infrared spectrum) while the optical-layer-set 873b at a minimum has one conductive layer used to provide a low-emissivity face. This arrangement of the optical layers offers the advantage of placing any atmosphere sensitive conductive layers such as silver in the 873a set so that carrier 896 and set 873b seal them from the atmosphere. In other related embodiments the optical composite can distribute its optical layers as three sets across two carriers with the set nearest the electrophoretic cell including the electrode, the set nearest the inside environment including the low-emissivity layer, and the set sandwiched between the carriers including the optical layers that substantially provide wavelength-selectivity. In general, the optical composite can distribute its optical layers as two or more sets divided by one or more carrier layers.

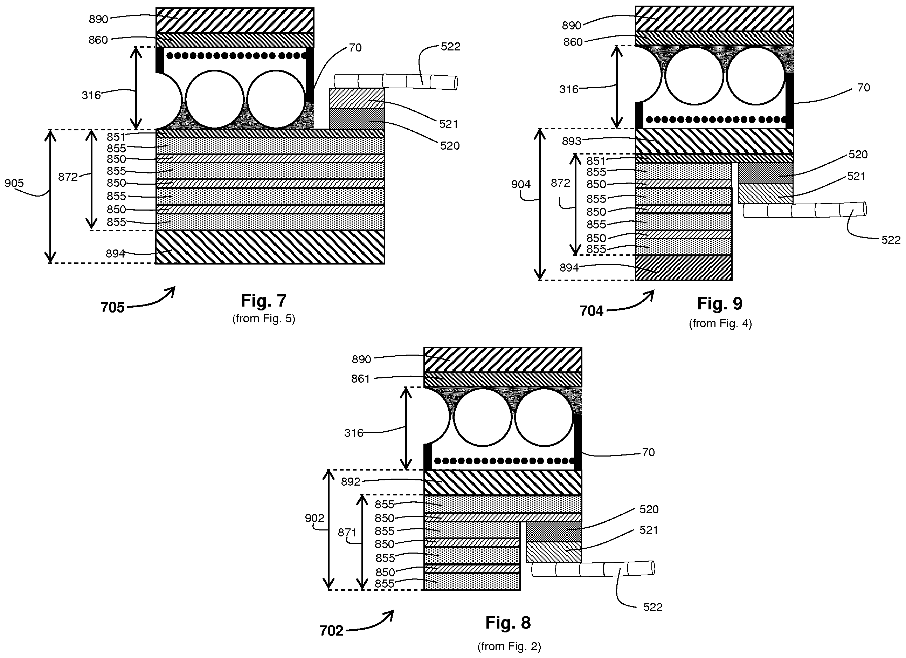

In figure 7 embodiment 705 (described earlier in relation to figures 5A and 5B) has a signal lead 522 connected to an electrode layer 851 of optical composite 905. As shown the electrode is a conductive layer 851 within the optical-layer-set 872 and is nearest the electrophoretic cell 316. In embodiment 705 the electrode is in contact with the cell 316. Preferably the conductive layer that is used as the electrode is a semiconductor layer that is stable when exposed to atmosphere, and preferably the electrode layer is indium tin oxide (ITO). Signal lead 522 can be soldered to a copper tape 521 or other highly conductive flexible material that in turn is bonded to conductive layer 851 via a conductive adhesive or conductive ink 520. The connection area and the four edges of the electrophoretic film 705 can be sealed with a suitable sealant (not shown).

The optical-layer-set 872 comprises conductive layers 850 and 851 and dielectric layers 855. As described conductive layer 851 is preferably a semiconductor layer and allows unrestricted connection to its face as it has no over coating layers whereas other conductive layers 850 in the optical-layer-set 870 can be metallic layers requiring dielectric or semiconducting oxide over layers to minimize (or avoid) degradation caused by exposure to atmosphere.

Figure 8 shows a lead 522 connecting to the first coated conductive layer 850 of the optical composite 902 of embodiment 702. The latter was described earlier in relation to figures 2A to 2D and the carrier 892 is between the electrode layer 850 and the electrophoretic cell 316. Similar to figure 7 connection is to the conductive layer closest to the electrophoretic cell, but unlike figure 7 embodiment 702 does not allow unrestricted connection. Instead a local connection area as shown in figure 8 must be prepared to allow access to the first coated conductive layer 850. Techniques to form a local connection area along an edge of optical composite 902 include:

a) Shield an edge or side area (or strip) of film 902 after depositing the first conductive layer 850 so that additional layers are not deposited in the shielded area. An edge area on a film can be shielded with a release liner or tape that is removed after depositing the subsequent layers of the optical-layer set 871, or with a slot-die metal shield or similar. The shielded edge area on the continuous roll of optical composite 902 provides access to connect to the first coated conductive layer 850.

b) Undermine the adhesion in an edge area of subsequent layers to the surface of the first coated conductive layer 850 so that the subsequent layers can easily be removed by adhering a strong adhesive tape to the edge area and peeling away the subsequent layers. Adhesion can be undermined by using a coating in an edge area that significantly reduces surface energy or changes surface chemistry to have poor compatibility with a subsequent dielectric layer. For example, a fluorocarbon or silicone type coating or self-assembled layer could be used.

c) Etch the over-coating layers in the local connection area using a chemical milling process and/or plasma etching. For example, ITO can be removed with hydrochloric acid-ferric chloride solution, or hydrochloric acid-nitric acid solution, or hydobromic acid and hydroiodic acid.

d) Ablate over-coating layers in a local connection area using laser or other ablating techniques.

Figure 9 shows a lead 522 connecting to the first coated conductive layer 851 of the optical composite 904 of embodiment 704. The latter was described earlier in relation to figures 4A and 4B and a first carrier 893 is between the electrode layer 851 and the electrophoretic cell 316. Similar to figure 8, a connection area must be prepared to allow access to the electrode layer 851. In embodiment 704 it is also necessary to remove the second carrier 894 in a connection area.

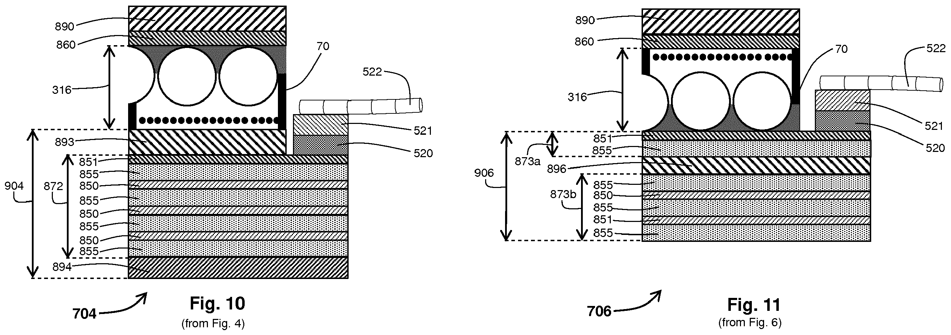

In figure 10 an alternative connection technique to that shown in figure 9 removes the first carrier 893 in a connection area to reveal the first coated conductive layer 851. Figures 9 and 10 both show connection to electrode layer 851 for embodiment 704. Carrier 893 can be removed in a connection area by dissolving it with suitable solvent or ablating it by laser or other technique.

Figure 11 shows a lead 522 connecting to semiconductor layer 851 of the optical composite 906 of embodiment 706. The latter was described earlier in relation to figures 6A and 6B. Similar to figure 7 the electrode layer 851 is in contact with the electrophoretic cell 316 and provides unrestricted connection to its surface. Figure 11 shows the optical composite 906 comprising optical-layer-sets 873a and 873b constructed (i.e. deposited) on carrier 896. In related embodiments described earlier the electrode is a silver nanowires layer coated onto the electrophoretic cell and the remaining optical layers and carrier are subsequently optically bonded to complete the optical composite. The silver nanowires layer allows unrestricted connection to its face once the remaining optical layers and carrier are offset to provide an edge connection area. The edge connection area is supported on (or overlaps) the electrophoretic cell in this case.

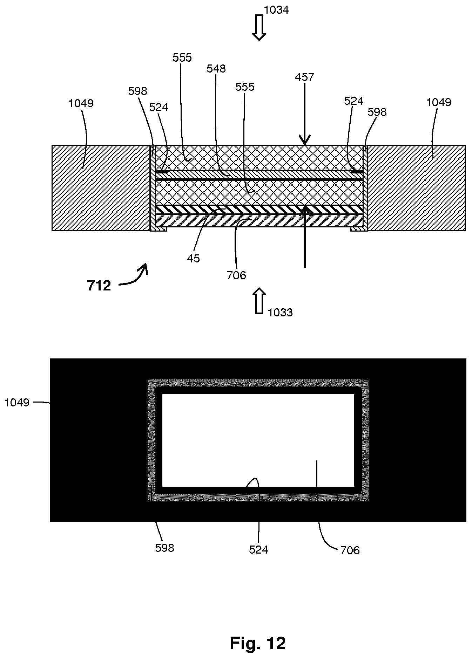

Figure 12 shows an embodiment 712 of a sunroof for a vehicle and comprises electrophoretic film 706 (described earlier in relation to figures 6A and 6B) applied to the inside 1033 face of a prior-assembled glass laminate 457 using an optical adhesive layer 45. A suitable adhesive type for applying an electrophoretic film embodiment to a glass surface includes a pressure sensitive adhesive and a suitable technique includes laminating between a pair of NIP rollers. Preferably the adhesive is in the form of a layer (protected with a release liner until used) such as an optical clear adhesive (OCA), or, alternatively the adhesive can be an optical clear resin (OCR). Preferably the adhesive is reworkable or provides the ability to be removed using external means such as a suitable solvent. If not already provided the adhesive layer 45 can incorporate an ultraviolet (UV) filter and in use filters 99% or more of the sunlight ultraviolet spectrum to shield the applied electrophoretic film. Suitable adhesive 45 can be loaded with UV absorbing nanoparticles that have negligible visible and infrared absorption. OCA films and OCR resins and UV filtering films and resins are available commercially from a number of companies including 3M, Nitto Denko, Mactac, Adhesives Research, Hitachi Chemical, and Sekisui.

Glass laminate 457 is prior assembled and optimized to provide industry specified safety standards or enhanced performance such as mechanical, penetration protection, thermal stress resistance, sound insulation, or added decorative effects, and the electrophoretic film 706 is optimized for variable control of solar reflectance. Preferably glass laminate 457 comprises a pair of glass panes 555 optically bonded to each other using a PVB interlayer 548 and an autoclave process.

In figure 12 embodiment 712 occupies an opening in a vehicle's roof 1049 and is shown in a second light state. An optional frame 598 supports the glass laminate 457 and optional masking element 524 (e.g. enamel or paint) hides edge areas of film 706 and together these elements can create a seamless appearance from outside a vehicle. The PVB interlayer 548 filters 99% or more of the sunlight ultra-violet spectrum to shield film 706. As described earlier in relation to figure 6, electrophoretic film 706 provides a low-emissivity face or surface to a vehicle's inside compartment 1033. This has the advantage of both blocking thermal radiation flow of heat from charged particles (due to absorbed visible sunlight) to the inside compartment to minimize solar heating in warm weather and reflecting thermal radiation from the inside compartment to minimize heat loss in cold weather.

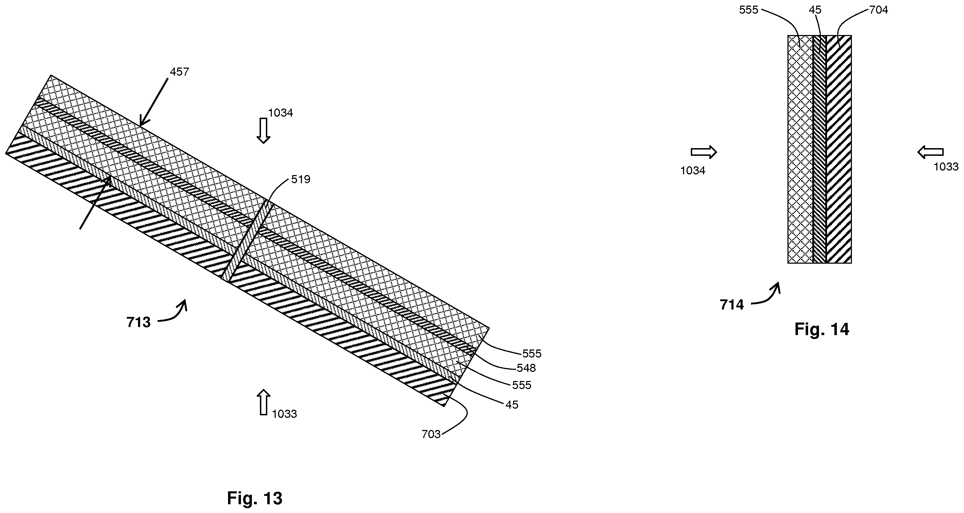

Figure 13 shows an embodiment 713 of a sloping glass wall and comprises electrophoretic film 703 (described earlier in relation to figures 3A and 3B) applied to the inside 1033 face of a prior-assembled glass laminate 457 using an optical adhesive layer 45. Individual monolithic panes are shown butt joined using bonding or sealing material 519. The assembly or laminate shown in figure 13 ensures compliance with safety standards for sloped glass walls or overhanging glass sections.

Figure 14 shows an embodiment 714 of a glass laminate and comprises electrophoretic film 704 (described earlier in relation to figures 4A and 4B) applied to the inside 1033 face of a glass pane 555 using an optical adhesive layer 45.

It will be appreciated that in related embodiments to those shown in figures 12 to 14 any of the electrophoretic films described can be applied to a rigid pane. Furthermore, a pane can be glass or a high-thermal-conductivity, amorphous, rigid, polymer sheet. If a rigid polymer sheet is used then its thermal conductivity is 0.5W/(m.K) or more, and preferably 0.75W/(m.K) or more, to ensure adequate conductive heat flow from charged particles to the face in contact with the outside environment. In other related embodiments any of the electrophoretic films can be applied to a laminate that incorporates other functions (i.e. a layered structure) including a transparent photovoltaic cell, a transparent touchscreen, a transparent luminescent or OLED sheet, or other electro-optical devices.

The embodiments described use their light states to provide variable visible sunlight transmittance with associated variable solar energy transmittance, and rejection of the sunlight infrared spectrum in all light states, to actively manage solar heating of an inside environment. The solar performance of embodiments can be described with solar expressions associated with glazing and defined in standards EN 410:2011 or ISO 9050-03 for example.

The first light state provides a maximum solar heat gain coefficient (SHGC) of 0.20 or less, and more preferably 0.16 or less, and most preferably 0.13 or less, and the second light state provides a minimum SHGC of 1.75 times or more, and preferably 2.0 times or more, the first light state's SHGC.

Embodiments provide variable sunlight illumination of an inside environment and the solar efficiency of that illumination is expressed by its visible light to solar gain (LSG) ratio (i.e. (visible transmittance) / (SHGC)). The second light state provides a minimum LSG of 1.25 or more, preferably 1.35 or more, and more preferably 1.40 or more, and the first light state provides a maximum LSG of 0.40 or less, and preferably 0.32 or less, and more preferably 0.25 or less.

The heat arising from sunlight energy absorbed by charged particles can subject glass panes adhered or optically bonded to electrophoretic films described herein to thermal shocks, and it has been found that in such embodiments the panes need to be resilient to thermal stress. Preferably a glass pane that is bonded to an electrophoretic film is treated to make it more resilient to thermal shock using one of the following processes: heat strengthening (e.g., as per EN 1863-1), chemical toughening (e.g., as per EN 12337-1), or thermal toughening (e.g., as per EN 12150-1). But any of these three processes, while improving resilience to thermal shock, can still leave a low level of glass panes liable to spontaneous breakage. In preferred embodiments a risk of spontaneous breakage due to thermal stress can be greatly reduced or eliminated by subjecting glass that was already treated to be heat-strengthened, chemically-toughened, or thermally-toughened, to a heat soak test or treatment (e.g., as per EN 14179-1) that through a process of elimination identifies good panes for bonding to an electrophoretic film. A heat soak test or treatment consists of placing prior treated glass panes in a furnace at a defined temperature and for a defined duration in order to promote and accelerate the breakage of susceptible panes.

Because embodiments substantially avoid the absorption of the sunlight infrared spectrum heat build-up is more than halved with respect to a device that absorbs sunlight infrared. But some heat can build-up in embodiments when exposed to strong sunlight. For example, an embodiment's face in contact with an outside environment will have its temperature raised by about 0.04 to 0.07 °C/W/m$^2$ over the outside environment's temperature. To dissipate all of the energy in the sunlight visible spectrum in a warm climate from a glass face, that is 445 W/m$^2$, would require a face temperature of 17.8 to 31.1 °C above the outside environment's temperature. The range is a rough indication or guide only since wind velocity is a significant factor in convective heat transfer from an embodiment's face.

As described earlier, the absorbed sunlight energy that is subsequently transmitted from an outside face of an embodiment such as those shown in figures 12 to 14 to an outside environment has two primary components: the first is thermal radiation and the second is convected heat and is strongly dependent on air velocity/flow across a face. The significance of thermal conduction in embodiments is that the layers within an electrophoretic laminate allow a significant proportion of sunlight energy absorbed by charged particles to flow as conducted heat from an electrophoretic cell to an outer face where it can be radiated and convected. The method herein to maximize conducted heat flow from charged particles to a face in contact with an environment is through selection of layer materials that maximize thermal conductance and through minimizing the thickness of layers between charged particles and that face.

With respect to the former, materials generally classified as thermally insulating (i.e. having a thermal conductivity of < 0.065 W/(m.K)) are avoided in electrophoretic films (e.g., 706) and electrophoretic laminates (e.g., 712). The different polymer materials in embodiments have a thermal conductivity of 0.1 W/(m.K) or more, and preferably of 0.15 W/(m.K) or more, and more preferably of 0.2 W/(m.K) or more.

An example of a polymer material that has high thermal conductivity is the Apec range of optically transparent co-polycarbonates from Bayer. The Apec polymer material has a thermal conductivity greater than glass making such material especially suitable as a replacement for glass panes in automotive and transport embodiments. Other examples of high thermal conductivity polymers include those having nm scale dispersed metallic filler particles or carbon-nano-tube (CNT) filler particles. In embodiments the thermal conductivity of a film substrate can be doubled or more by using dispersed nm scale metallic or CNT particles, and similarly the thermal conductivity of an optical adhesive layer 45 can be doubled or more using filler particles.

With respect to the thickness of polymer layers within an embodiment, the thickness of a film substrate such as PET (thermal conductivity 0.15 to 0.24W/(m.K)) or PBT (thermal conductivity 0.29W/(m.K)) and optical adhesive layer 45 is minimized to maximize thermal conductivity in a glass laminate. Preferably the thickness of a film substrate is 200 μm or less, more preferably 175 μm or less, and most preferably 125 μm or less. Preferably the thickness of an adhesive layer 45 is 100 μm or less, more preferably 75 μm or less, and most preferably 50 μm or less.

In the earlier described embodiments 704 and 705 their optical composites 904 and 905 had a carrier film 894 that is required to substantially transmit thermal radiation (low absorptance) in order that its optical layers can provide an effective low-emissivity face. Thermal radiation is generally in the range 3 to 25 μm (in particular 3 to 15 μm) for objects between 0°C and 100°C. Polymers can transmit some of this thermal radiation, particularly if their thickness is about 25 μm or less. The chemical bonds of polymers cause infrared extinction bands as is known from FTIR analysis in the prior art. Preferably polymer for carrier 894 substantially transmits infrared outside its extinction bands in thicknesses up to 50 μm, and in this regard polyethylene makes an excellent choice as does an amorphous fluoropolymer such as Teflon AF from Dupont. Polyethylene has a total longwave infrared transmission (from 3 to 15 $\mu$m) of about 74% at 100 $\mu$m thickness and 42% at 0.5mm thickness between 0°C and 100°C. Polypropylene has about 60% longwave infrared transmission at 100 $\mu$m thickness and about 26% at 0.5mm. PET has about 20% longwave infrared transmission at 100 $\mu$m thickness and about 4% at 0.5mm.

Next, the optical composite and its optical layers (i.e. optical-layer-sets) are described. The optical layers are preferably neutral with respect to visible light transmission and comprise conductive layers and dielectric layers. The conductive layers can be metallic (shown in the figures as 850) or semiconductor layers (shown in the figures as 851) and the dielectric layers can have high or low refractive index (shown in the figures as 855). Suitable conductive layers combine high conductivity with low absorption in the visible spectrum. In constructing an optical composite thin-film nano-coatings (i.e. the optical layers) are deposited on a carrier or substrate film using any suitable technique including a physical vapour deposition technique such as sputter deposition, evaporation, or pulsed laser deposition, or a chemical vapour deposition, sol-gel, or electroplating technique.

Sputter deposition is preferred for the optical layers due to its proven compatibility with coating thin films on polymer film and the availability of precursors in the form of targets (manufactured from highly pure metals) and reactant gases. Sputter deposition includes: magnetron sputtering such as MSVD, cathodic arc deposition, ion beam sputtering, ion assisted sputtering, pulsed laser deposition, plasma sputtering, R-F diode sputtering, DC reactive sputtering, or other sputter deposition variants. There are three phases in a deposition process. In an initial phase production of ionic or atomic species is triggered; this is followed by the transportation of the species to the carrier; and, in the third phase the species react with the carrier and condense to obtain a deposited layer. Sputtering affords precise control and modification of the physical and chemical structure of thin films due to the fact that plasma ion bombardment can activate chemical reactions simultaneously with physical sputtering to form compounds. The carrier (e.g., a PET film) may require a planarization stage before sputter deposition. For example, a curable primer can be applied to even out the surface and/or improve adhesion of the first deposited optical layer.

In general, the prior art for spectrally selective coatings and low-emissivity coatings on glass and film, and transparent conductors (TC) on films, provide useful information on the selection of layer materials and the design of optical layers. Suitable metallic layers for use in an optical composite include Ag, Sn, In, Ti, Zn, Si, La, Ce, Zr, Fe, Al, Cr, Co, Ni, Cu, Pt, Rh, Mn, Ta, W, V, Mo and stainless steel; suitable semiconductor layers include tin-doped indium oxide (i.e. ITO), antimony-doped tin oxide (i.e. ATO), antimony oxide doped tin oxide, lanthanum hexaboride, aluminium-doped zinc oxide, indium-doped zinc oxide, tin-doped zinc oxide, silicon-doped zinc oxide, fluorine-doped zinc oxide, gallium-doped zinc oxide, fluorine-doped tin oxide, cadmium tin oxide, tungsten oxide, tungsten oxide composite, cobalt oxide, chromium oxide, iron oxide, nickel oxide, titanium nitride (i.e. TiN), or cerium hexaboride; suitable high refractive index dielectric layers include $BiO_3$, $In_2O_3$, $SnO_2$, $TiO_2$, $TiO_x$, $ZnO_2$, $ZnS$, $Si_3N_4$, $Nb_2O_5$, and $Ta_2O_5$; and suitable low refractive index dielectric layers include $SiO_2$ and $MgF_2$. Preferably in embodiments the implementation of the optical composite's wavelength-selectivity includes a silver conductive layer, and preferably the implementation of the conducting electrode uses an ITO layer. A low emissivity face can use either of these preferred conductive layers but preferably a silver conductive layer is used to achieve the lowest emissivity.

The conductive layers have free electrons that exhibit volume plasmon effects producing a plasma frequency above which electromagnetic radiation is reflected. The corresponding plasma wavelength (i.e. (light velocity in the layer)/(plasma frequency)) derives the cut-off wavelength of the optical composite. It falls within or adjacent the sunlight infrared part of the light spectrum and preferably is adjacent or near the visible spectrum. The plasma angular frequency $\omega_p$ and plasma wavelength $\lambda_p$ for the conductive layers are given by:

$$\omega_p = 2 \pi c / \lambda_p = [ N_e e^2 / \epsilon_o m^* ] ^{1/2}$$

$N_e$ = the free electron density,
$m^*$ = effective electron mass,
$e$ = electronic charge,
$c$ = velocity of light,
$\epsilon_o$ = dielectric constant

The optical layers reject infrared light that has a wavelength greater than its cut-off wavelength using its plasma wavelength, and preferably also uses thin-film interference to reject infrared light. Thin-film interference is implemented by its optical stack. Rejection of the sunlight infrared spectrum can include reflection, destructive interference, and absorption. In embodiments the infrared cut-off wavelength is within the range from 0.65 to 1.5 $\mu$m, and preferably 0.7 to 1.2 $\mu$m, and most preferably 0.725 to 1.1 $\mu$m. In an embodiment's second light state this infrared cut-off wavelength determines the spectrum of transmitted sunlight and by selecting its value an optical composite can be adapted for an operating climate.

Another measurement of an optical composite's ability to reject the sunlight infrared spectrum is its LSG ratio. This is a more reliable measurement than relying solely on the cut-off wavelength. In embodiment's an optical composite's optical layers are designed so that the measured LSG ratio for the composite is a minimum of 1.25 or more, and preferably 1.35 or more, and most preferably 1.40 or more. The higher the LSG ratio, the less solar energy transmitted to an inside environment in the second light state of an embodiment. It will be appreciated that in a moderate climate it can be preferably to use an LSG of about 1.25 for the optical composite to allow a low level of transmission of the sunlight infrared spectrum because some solar heating is beneficial, whereas in hot climates an LSG of 1.40 or more maximizes the rejection of the sunlight infrared spectrum because solar heating increases the load on climate control systems. The selection of an optical composite's LSG ratio, through the design of its optical layers, can be used as an additional technique to adapt an optical composite to an operating climate. For example, an LSG ratio close to 1.25 is typical of an optical composite having one silver conductive layer, and preferably embodiments have two or more silver conductive layers (e.g., dielectric + Ag +dielectric +Ag +dielectric) to maximize the LSG ratio. In embodiments having two silver layers about 75% or more of the sunlight infrared spectrum is rejected, and in embodiments having three silver layers about 90% is rejected.

In an example of the basic structure of an optical composite a silver conductive layer has a high refractive index dielectric layer on each side, $TiO_2$ (e.g., 24nm) + Ag (e.g., 18nm) + $TiO_2$ (e.g., 24nm), and a semiconducting layer (preferably ITO) provides a second conductive layer with a sheet resistivity of about 70 ohm square. In a deposition process for $TiO_2$ a silver conductive layer can become damaged by oxidation and diffusion. In some embodiments a conductive barrier layer protects the silver layer during the deposition process. For example, a titanium layer of about 3nm or less can provide a deposition-barrier-layer in the following: air + $TiO_2$ (e.g., 24nm) + Ti (e.g., 2nm) + Ag (e.g., 18nm) + Ti (e.g., 2nm) + $TiO_2$ (e.g., 24nm).

In more preferred embodiments an ITO layer is used as a deposition-barrier-layer: air + $TiO_2$ (e.g., 17nm) + ITO (e.g., 10nm) + Ag (e.g., 18nm) + $TiO_2$ (e.g., 24nm). In other embodiments a dielectric such as $TiO_x$ can provide a deposition-barrier-layer: air + $TiO_2$ (e.g., 22nm) + $TiO_x$ (e.g., 5nm) + Ag (e.g., 18nm) + $TiO_2$ (e.g., 24nm).

Silver conductive layers have poor oxidation and chemical resistance and in embodiments are protected against degradation by the atmosphere using over-layers including thin-film, nano-coating layers and/or thick layers such as hard coat layer 840 in figure 3A or polymer carrier 894 in figure 4A. In embodiments suitable nano-coating layers between air and a silver layer in the optical composite include dielectric layers, semiconductor layers, and metal layers as listed earlier for the optical layers. $TiO_2$, $SiO_2$, $MgF_2$, or $Si_3N_4$ are preferred dielectric layers. The one or more protective layers have a thickness between 1nm and 300nm, and preferably between 10nm and 150nm. As well as improving atmospheric durability the protective layers also improve the resistance of the optical composite to humidity, high temperatures, and scratches. For example, protective layers include the metal titanium and two dielectric layers: air + $SiO_2$ (e.g., 40nm) + $TiO_2$ (e.g., 24nm) + Ti (e.g., 2nm) + Ag (e.g., 18nm).

In some embodiments additional dielectric layers minimize the reflection of visible light and act as anti-reflective layers for the conductive layers and the carrier layers. By incorporating alternating dielectric layers having contrasting refractive indices either side of a carrier layer the reflection of visible light can be further reduced. For example, an optical stack comprising silver conductive layers and antireflective dielectric layers for visible light is very efficient at maximizing visible light transmittance and minimizing the SHGC resulting in a maximum LSG ratio. Furthermore, the anti-reflective dielectric layers are adapted to minimize visible light reflection when one face of an optical composite is in contact with an electrophoretic cell and the other face is in contact with air in an inside environment.

## Claims

1. A flexible electrophoretic film (701,705) comprising an electrophoretic cell (302,316) containing an electrophoretic ink (30), a first electrode (860) and a substrate (890) adjoining and covering one face of said cell, and a composite (904, 905, 906) of optical layers (850,851,855) adjoining and covering the opposite face of said electrophoretic cell, said composite of optical layers including one or more carrier layers (893,894) and a conductive layer (851) providing a second electrode,
   **characterised in that**
   said composite of optical layers comprises two or more conductive layers (850, 851), the second electrode being the conductive layer (851) nearest said electrophoretic cell, and said composite of optical layers is transmitting the sunlight visible spectrum and significantly rejecting the sunlight infrared spectrum.

2. An electrophoretic film as claimed in claim 1 wherein said optical layers are constructed on said one or more carrier layers (893,894) to provide said composite of optical layers which is applied to said electrophoretic cell.

3. An electrophoretic film as claimed in claim 1 wherein one or more of said optical layers are constructed on said electrophoretic cell and the remaining optical layers are constructed on one or more carrier layers (894), the remaining optical layers adjoining the optical layers constructed on said electrophoretic cell to provide said composite of optical layers.

4. An electrophoretic film as claimed in claim 1 wherein said electrophoretic ink has charged particles (11) of at least one type in a suspending fluid, and said electrophoretic film has at least one light state that is substantially transparent to visible light to provide visual access there through, and said charged particles are responsive to an electric field applied across said electrodes to move between: a first extreme light state in which particles are maximally spread within said electrophoretic cell to lie in the path of sunlight through the film so that in said first extreme light state said film strongly rejects sunlight; and a second extreme light state in which said particles are maximally concentrated within the cell to remove them from the path of sunlight through the film so that in said second extreme light state said film transmits the sunlight visible spectrum while significantly rejecting the sunlight infrared spectrum.

5. A device including one of: a sunlight attenuator, a sunlight shutter, a sunlight modulator, a variable sunlight transmittance sheet, a variable sunlight rejection sheet, a variable sunlight reflectance sheet, or a sunlight glare-avoidance device, the device incorporating the electrophoretic film as claimed in claim 1.

6. An electrophoretic film as claimed in claim 1 wherein said composite of optical layers further comprises dielectric layers (855), and said conductive layers are either metallic or semiconductor layers.

7. An electrophoretic film as claimed in claim 6 wherein said conductive layers and dielectric layers comprise thin-film nano-coatings.

8. An electrophoretic film as claimed in claim 1 wherein said optical composite is arranged to act as a shortpass filter for visible sunlight having an infrared cut-off wavelength adjacent the visible spectrum and within the range from 0.65 to 1.5 $\mu$m.

9. An electrophoretic film as claimed in claim 6 wherein one of said conductive layers is silver.

10. An electrophoretic film as claimed in claim 6 wherein said conductive layer (851) which is the second electrode is a semiconducting oxide layer.

11. An electrophoretic film as claimed in claim 4 where, in said second extreme light state, said infrared cut-off wavelength of said wavelength-selective optical composite determines the spectrum of transmitted sunlight and is adapted for an operating climate providing a visible light to solar gain ratio of 1.25 or more.

12. An electrophoretic film as claimed in claim 1 wherein said rejection of the sunlight infrared spectrum includes one or more of: reflection, destructive interference, and absorption.

13. An electrophoretic film as claimed in claim 4 wherein said optical composite also provides a face with an emissivity of 0.35 or less to substantially block thermal radiation heat flow from said charged particles to an inside environment.

14. An electrophoretic film as claimed in claim 1 wherein the optical composite provides said optical layers between a pair of said carrier layers (893,894) to protect and seal said optical layers, and one carrier layer (893) spaces apart said electrode layer from said electrophoretic cell while the other carrier layer (894) is between the optical layers and an outside environment.

15. An electrophoretic film as claimed in claim 1 wherein said optical composite (906) provides said optical layers distributed as two or more sets of layers (873a, 873b) divided by one or more of said carrier layers (896).

**Patentansprüche**

1. Flexibler elektrophoretischer Film (701, 705), beinhaltend eine elektrophoretische Zelle (302, 316), die eine elektrophoretische Tinte (30) enthält, eine erste Elektrode (860) und ein Substrat (890), die an eine Seite der Zelle angrenzen und diese abdecken, und einen Verbund (904, 905, 906) aus optischen Schichten (850, 851, 855), die an die gegenüberliegende Seite der elektrophoretischen Zelle angrenzen und diese abdecken, wobei der Verbund aus optischen Schichten eine oder mehrere Trägerschichten (893, 894) und eine leitfähige Schicht (851), die eine zweite Elektrode bereitstellt, beinhaltet, **dadurch gekennzeichnet, dass** der Verbund aus optischen Schichten zwei oder mehr leitfähige Schichten (850, 851) umfasst, wobei die zweite Elektrode die leitfähige Schicht (851) ist, die der elektrophoretischen Zelle am nächsten ist, und der Verbund aus optischen Schichten das Sonnenlicht im sichtbaren Spektrum durchlässt und das Sonnenlicht im Infrarotspektrum maßgeblich abweist.

2. Elektrophoretischer Film nach Anspruch 1, wobei die optischen Schichten auf der einen oder den mehreren Trägerschichten (893, 894) konstruiert sind, um den Verbund aus optischen Schichten bereitzustellen, der auf der elektrophoretischen Zelle angebracht ist.

3. Elektrophoretischer Film nach Anspruch 1, wobei eine oder mehrere der optischen Schichten auf der elektrophoretischen Zelle konstruiert sind und die restlichen optischen Schichten auf einer oder mehreren Trägerschichten (894) konstruiert sind, wobei die restlichen optischen Schichten an die optischen Schichten angrenzen, die auf der elektrophoretischen Zelle konstruiert sind, um den Verbund aus optischen Schichten bereitzustellen.

4. Elektrophoretischer Film nach Anspruch 1, wobei die elektrophoretische Tinte geladene Teilchen (11) mindestens eines Typs in einem Suspensionsfluid aufweist und der elektrophoretische Film mindestens einen Lichtzustand aufweist, der gegenüber sichtbarem Licht im Wesentlichen transparent ist, um visuellen Zugang durch diesen bereitzustellen, und wobei die geladenen Teilchen auf ein über die Elektroden angelegtes elektrisches Feld reagieren, um sich zwischen Folgendem zu bewegen: einem ersten Extremlichtzustand, in dem Teilchen innerhalb der elektrophoretischen Zelle maximal verbreitet sind, um in dem Weg von Sonnenlicht durch den Film zu liegen, sodass in dem ersten Extremlichtzustand der Film Sonnenlicht stark abweist; und einem zweiten Extremlichtzustand, in dem die Teilchen innerhalb der Zelle maximal konzentriert sind, um sie aus dem Weg von Sonnenlicht durch den Film zu entfernen, sodass in dem zweiten Extremlichtzustand der Film das Sonnenlicht im sichtbaren Spektrum durchlässt, während er das Sonnenlicht im Infrarotspektrum maßgeblich abweist.

5. Vorrichtung, die eines von Folgendem beinhaltet: einem Sonnenlichtabschwächer, einer Sonnenlichtblende, einem Sonnenlichtmodulator, einem Reguliersonnenlichtdurchlasssflächengebilde, einem Reguliersonnenlichtabweisflächengebilde, einem Reguliersonnenlichtreflexionsflächengebilde oder einer Sonnenlichtblendungsvermeidungsvorrichtung, wobei die Vorrichtung den elektrophoretischen Film nach Anspruch 1 inkorporiert.

6. Elektrophoretischer Film nach Anspruch 1, wobei der Verbund aus optischen Schichten ferner dielektrische Schichten (855) umfasst und die leitfähigen Schichten entweder Metall- oder Halbleiterschichten sind.

7. Elektrophoretischer Film nach Anspruch 6, wobei die leitfähigen Schichten und dielektrischen Schichten Dünnfilmnanobeschichtungen umfassen.

8. Elektrophoretischer Film nach Anspruch 1, wobei der optische Verbund angeordnet ist, um als ein Kurzpassfilter für sichtbares Sonnenlicht mit einer Infrarot-Cut-off-Wellenlänge neben dem sichtbaren Spektrum und innerhalb des Bereichs von 0,65 bis 1,5 $\mu$m zu wirken.

9. Elektrophoretischer Film nach Anspruch 6, wobei eine der leitfähigen Schichten Silber ist.

10. Elektrophoretischer Film nach Anspruch 6, wobei die leitfähige Schicht (851), welche die zweite Elektrode ist, eine halbleitende Oxidschicht ist.

11. Elektrophoretischer Film nach Anspruch 4, wobei in dem zweiten Extremlichtzustand die Infrarot-Cut-off-Wellenlänge des wellenlängenselektiven optischen Verbunds das Spektrum von durchgelassenem Sonnenlicht bestimmt und für ein Betriebsklima zum Bereitstellen eines Verhältnisses von sichtbarem Licht zu Solargewinn von 1,25 oder mehr angepasst ist.

12. Elektrophoretischer Film nach Anspruch 1, wobei die Abweisung des Sonnenlichts im Infrarotspektrum eines oder mehrere von Folgendem beinhaltet: Reflexion, destruktiver Interferenz und Absorption.

13. Elektrophoretischer Film nach Anspruch 4, wobei der optische Verbund auch eine Seite mit einem Emissionsvermögen von 0,35 oder weniger bereitstellt, um Wärmestrahlungswärmefluss von den geladenen Teilchen zu einer Innenumgebung im Wesentlichen zu blockieren.

14. Elektrophoretischer Film nach Anspruch 1, wobei der optische Verbund die optischen Schichten zwischen einem Paar der Trägerschichten (893, 894) bereitstellt, um die optischen Schichten zu schützen und abzudichten, und wobei eine Trägerschicht (893) die Elektrodenschicht von der elektrophoretischen Zelle beabstandet, während sich die andere Trägerschicht (894) zwischen den optischen Schichten und einer Außenumgebung befindet.

15. Elektrophoretischer Film nach Anspruch 1, wobei der optische Verbund (906) die optischen Schichten, verteilt als zwei oder mehr Sätze Schichten (873a, 873b), getrennt durch eine oder mehrere der Trägerschichten (896), bereitstellt.

**Revendications**

1. Film électrophorétique flexible (701, 705) comprenant une cellule électrophorétique (302, 316) contenant une encre électrophorétique (30), une première électrode (860) et un substrat (890) attenant à et recouvrant une face de ladite cellule, et un composite (904, 905, 906) de couches optiques (850, 851, 855) attenant à et recouvrant la face opposée de ladite cellule électrophorétique, ledit composite de couches optiques comprenant une ou plusieurs couches de support (893, 894) et une couche conductrice (851) fournissant une seconde électrode, **caractérisé en ce que** ledit composite de couches optiques comprend deux ou plus de deux couches conductrices (850, 851), la seconde électrode étant la couche conductrice (851) la plus proche de ladite cellule électrophorétique, et ledit composite de couches optiques transmettant le spectre visible de lumière du soleil et rejetant fortement le spectre infrarouge de lumière du soleil.

2. Film électrophorétique selon la revendication 1 dans lequel lesdites couches optiques sont construites sur ladite une ou plusieurs couches de support (893, 894) pour fournir ledit composite de couches optiques qui est appliqué à ladite cellule électrophorétique.

3. Film électrophorétique selon la revendication 1 dans lequel une ou plusieurs desdites couches optiques sont construites sur ladite cellule électrophorétique et les couches optiques restantes sont construites sur une ou plusieurs couches de support (894), les couches optiques restantes étant attenantes aux couches optiques construites sur ladite cellule électrophorétique pour fournir ledit composite de couches optiques.

4. Film électrophorétique selon la revendication 1 dans lequel ladite encre électrophorétique comprend des particules chargées (11) d'au moins un type dans un liquide de suspension, et ledit film électrophorétique comprend au moins un état de lumière qui est sensiblement transparent à la lumière visible pour fournir un accès visuel à travers celui-ci, et lesdites particules chargées répondent à un champ électrique appliqué sur lesdites électrodes pour se déplacer entre : un premier état de lumière extrême dans lequel des particules sont diffusées au maximum à l'intérieur de ladite cellule électrophorétique pour reposer dans le trajet de lumière du soleil à travers le film de sorte que dans ledit premier état de lumière extrême ledit film rejette fortement la lumière du soleil ; et un second état de lumière extrême dans lequel lesdites particules sont concentrées au maximum à l'intérieur de la cellule pour retirer celles-ci du trajet de lumière du soleil à travers le film de sorte que dans ledit second état de lumière extrême ledit film transmette le spectre visible de lumière du soleil tout en rejetant fortement le spectre infrarouge de lumière du soleil.

5. Dispositif comprenant un élément parmi : un atténuateur de lumière du soleil, un obturateur de lumière du soleil, un modulateur de lumière du soleil, une feuille de transmission de lumière du soleil variable, une feuille de rejet de lumière du soleil variable, une feuille de réflexion de lumière du soleil variable ou un dispositif anti-éblouissement de lumière du soleil, le dispositif incorporant le film électrophorétique selon la revendication 1.

6. Film électrophorétique selon la revendication 1 dans lequel ledit composite de couches optiques comprend en outre des couches diélectriques (855), et lesdites couches conductrices sont soit des couches métalliques, soit des couches semi-conductrices.

7. Film électrophorétique selon la revendication 6 dans lequel lesdites couches conductrices et couches diélectriques comprennent des nanorevêtements de film mince.

8. Film électrophorétique selon la revendication 1 dans lequel ledit composite optique est agencé pour agir comme un filtre passe-bas pour la lumière du soleil visible comprenant une longueur d'onde de coupure infrarouge attenante au spectre visible et comprise dans la plage de 0,65 à 1,5 $\mu$m.

9. Film électrophorétique selon la revendication 6 dans lequel l'une desdites couches conductrices est de l'argent.

10. Film électrophorétique selon la revendication 6 dans lequel ladite couche conductrice (851) qui est la seconde électrode est une couche d'oxyde semi-conductrice.

11. Film électrophorétique selon la revendication 4 dans lequel, dans ledit second état de lumière extrême, ladite longueur d'onde de coupure infrarouge dudit composite optique à sélection de longueur d'onde détermine le spectre de lumière du soleil transmise et est adaptée à un climat de fonctionnement fournissant une lumière visible à un rapport de gain solaire de 1,25 ou plus.

12. Film électrophorétique selon la revendication 1 dans lequel ledit rejet du spectre infrarouge de lumière du soleil comprend un ou plusieurs éléments parmi : la réflexion, l'interférence destructrice et l'absorption.

13. Film électrophorétique selon la revendication 4 dans lequel ledit composite optique fournit également une face présentant une émissivité de 0,35 ou moins pour bloquer sensiblement un flux chaleur de rayonnement thermique desdites particules chargées vers un environnement intérieur.

14. Film électrophorétique selon la revendication 1 dans lequel le composite optique fournit lesdites couches optiques entre une paire desdites couches de support (893, 894) pour protéger et sceller lesdites couches optiques, et une couche de support (893) espace ladite couche d'électrode de ladite cellule électrophorétique alors que l'autre couche de support (894) est entre les couches optiques et un environnement extérieur.

15. Film électrophorétique selon la revendication 1 dans lequel ledit composite optique (906) fournit lesdites couches optiques distribuées sous la forme de deux ou plus de deux ensembles de couches (873a, 873b) divisés par une ou plusieurs desdites couches de support (896).

Fig. 1A

Fig. 1B

Fig. 2A

Fig. 2B

**Fig. 2C**

**Fig. 2D**

Fig. 3B

Fig. 3A

Fig. 4A

Fig. 4B

Fig. 5A

Fig. 5B

EP 3 004 980 B1

Fig. 6A

Fig. 6B

Fig. 9
(from Fig. 4)

Fig. 8
(from Fig. 2)

Fig. 7
(from Fig. 5)

**Fig. 10**
(from Fig. 4)

704

**Fig. 11**
(from Fig. 6)

706

EP 3 004 980 B1

**Fig. 12**

EP 3 004 980 B1

**Fig. 13**

**Fig. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IE S20130104
- IE S20130181
- KR 20120011532